# EUROPÄISCHE PATENTSCHRIFT

(11) **EP 0 625 397 B1**
(45) Veröffentlichungstag und Bekanntmachung des Hinweises auf die Patenterteilung: **29.01.1997**
(21) Anmeldenummer: 94810253.8
(22) Anmeldetag: 03.05.1994
(51) Int. Cl.: B23B 51/10

(54) **Werkzeug zum Kalibrieren und Entgraten von Rohrenden**
Tool to calibrate and deburr tube ends
Outil de calibrage et d'ébavurage d'extrémité de tubes

(30) Priorität: 14.05.1993 CH 1474/93
(43) Veröffentlichungstag der Anmeldung: 23.11.1994
(73) Patentinhaber: GEBERIT TECHNIK AG, CH-8645 Jona (CH)
(72) Erfinder: Weiss, Paul, CH-8645 Jona (CH)
(74) Vertreter: Groner, Manfred

(56) Entgegenhaltungen:
- EP-A- 0 006 434
- DE-A- 2 518 187
- FR-A- 2 231 464
- FR-A- 2 634 679
- US-A- 3 645 640
- MICROTECNIC, Nr.3, 1975, ZURICH CH Seite 14 'Outil combiné'

## Beschreibung

Die Erfindung betrifft ein Werkzeug zum Kalibrieren und Entgraten von Rohrenden, mit wenigstens einem zylindrischen Bereich zum Kalibrieren und einem kegelförmigen Bereich zum Entgraten.

Zum Herstellen einer hochwertigen Verbindung zwischen einem Fitting und einem Ende eines Verbundrohres muss das anzuschliessende Ende des Verbundrohres entgratet und, falls dieses unrund ist, zudem noch kalibriert werden. Ein Kalibrieren ist insbesondere deshalb erforderlich, weil beim Abschneiden des Rohres das Rohrende in der Regel deformiert wird. Dazu wurde bisher ein Werkzeug der oben genannten Gattung verwendet. Dieses weist an einem Halter zum Entgraten einen Krauskopf und zum Kalibrieren entsprechend den üblichen Rohrgrössen mehrere Zapfen mit einem zylindrischen Bereich auf. Mit Hilfe dieses Werkzeuges wurde nach dem Ablängen des Verbundrohres mittels eines Rohrabschneiders das anzuschliessende Rohrende mit dem Krauskopf innen entgratet und auf dem entsprechenden Kalibrierzapfen dieses Rohrende kalibriert. Das so vorbereitete Rohr wurde anschliessend auf den Fitting aufgeschoben und mit einer Presszange verpresst. Das genannte Kalibrieren und Entgraten sind wesentliche Montageschritte für die Herstellung dichter Pressverbindungen, welche sich insbesondere in der Hausinstallation ausserordentlich bewährt haben.

Die FR-A-2231464 zeigt ein Werkzeug zum Entgraten von Rohrenden, das einen kegelförmigen Bereich zum Entgraten aufweist. Vor diesem Bereich ist ein zylindrischer Bereich angeordnet, der dazu dient, das Werkzeug beim Entgraten am Rohrende zu führen.

Der Erfindung liegt die Aufgabe zugrunde, ein Werkzeug der genannten Gattung zu schaffen, mit dem sich die genannten Montageschritte noch einfacher und dennoch mit einem qualitativ hochwertigen Ergebnis durchführen lassen. Die Aufgabe ist bei einem gattungsgemässen Werkzeug dadurch gelöst, dass die beiden Bereiche an einem Kopf hintereinander angeordnet sind, derart, dass beim Einführen des Kopfes in ein zu bearbeitendes Rohrende zuerst der zylindrische Bereich und anschliessend der kegelförmige Bereich mit dem Rohrende in Eingriff bringbar sind.

Beim erfindungsgemässen Werkzeug sind der Kalibrierzapfen und der Entgratkonus somit nicht separat an einem Halter, sondern hintereinander an einem Kopf angeordnet. Dies hat den wesentlichen Vorteil, dass nach dem Kalibrieren nicht zum Entgratkonus gewechselt werden muss, sondern in einem Arbeitsgang durch Eindrehen des Kopfes in das anzuschliessende Rohrende kalibriert und entgratet werden kann. Da nun das Rohrende beim Entgraten durch den zylindrischen Bereich bezüglich des Kopfes zentriert ist, ist ein Verkanten des Rohres beim Entgraten vermieden. Dadurch ist sichergestellt, dass die Entgrattiefe entlang der Innenkante des Rohres immer genau definiert und gleichmässig ist. Mit dem erfindungsgemässen Werkzeug wird somit eine einfachere, schnellere und dennoch saubere Vorbereitung von Rohrenden für die Montage von qualitativ hochwertigen Fittingverbindungen erreicht. Weist das Werkzeug gemäss einer Weiterbildung der Erfindung radial angeordnete Spannuten auf, so ist sichergestellt, dass beim Entgraten die vom Rohr abgehobenen Späne nach aussen weggehen und nicht in das Rohr gelangen. Damit ist vermieden, dass bei einer Pressverbindung im Rohr verbliebene Späne diese undicht machen. Weitere vorteilhafte Merkmale ergeben sich aus den abhängigen Patentansprüchen, der nachfolgenden Beschreibung und der Zeichnung.

Ausführungsbeispiele der Erfindung werden nachfolgend anhand der Zeichnung näher erläutert. Es zeigen:
- Fig. 1: eine perspektivische Ansicht eines erfindungsgemässen Werkzeuges und eines zu bearbeitenden Rohrendes,
- Fig. 2: eine Ansicht des Werkzeuges gemäss Fig. 1,
- Fig. 3a und 3b: Längsschnitte durch einen Teil des Werkzeuges und ein Rohrende zur Erläuterung des Kalibrierens und Entgratens,
- Fig. 4: einen Teillängsschnitt durch das erfindungsgemässe Werkzeug,
- Fig. 5: eine Teilansicht nach einer Variante des erfindungsgemässen Werkzeugs, und
- Fig. 6: eine Teilansicht des Werkzeugs nach der Variante gemäss Fig. 5.

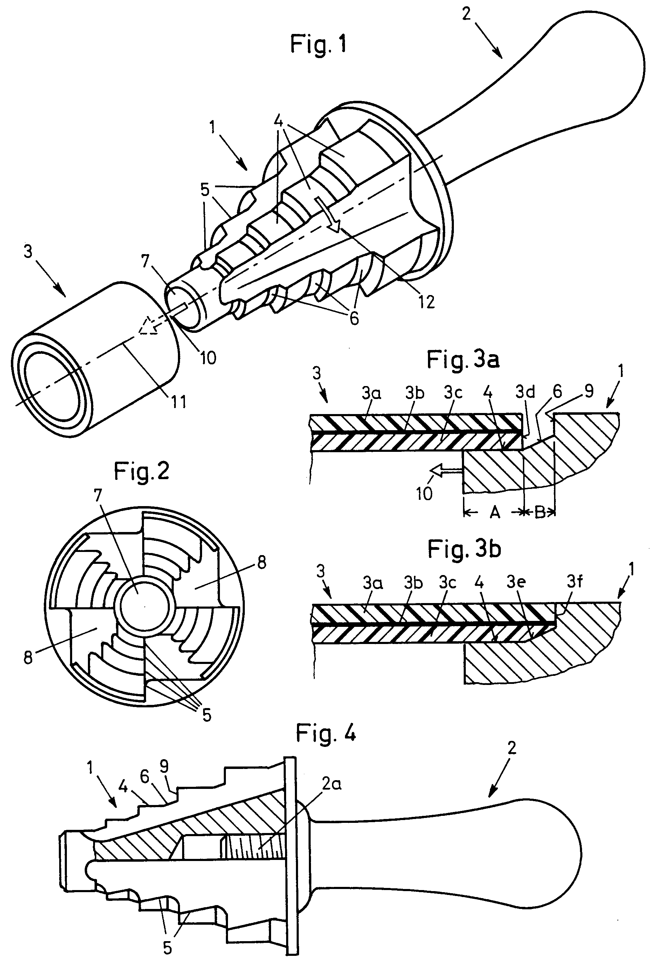

Das Werkzeug weist gemäss Fig. 1 einen Handgriff 2 auf, auf dem ein sich zu einer Stirnseite 7 hin stufenförmig verjüngender Kopf 1 aufgeschraubt ist. Zur lösbaren Befestigung des Kopfes 1 mit dem Handgriff 2 weist letzterer gemäss Fig. 4 einen Gewindezapfen 2a auf, der in ein Gewindeloch 1a des Kopfes 1 eingeschraubt ist. Der Kopf 1 ist vorzugsweise aus einem Stück, beispielsweise als Metallgussstück hergestellt.

In die Aussenseite des Kopfes 1 sind vier Spannuten 8 eingearbeitet, die gemäss Fig. 2 drehsymmetrisch zueinander angeordnet sind und die sich parallel zu einer Drehachse 11 des Kopfes 1 erstrecken. Zwischen den Spannuten 8 erstrekken sich in Umfangsrichtung des Kopfes 1 jeweils koaxial zur Achse 11 mehrere zylindrische Bereiche oder Abschnitte 4, die jeweils einen Durchmesser aufweisen, der einem üblichen Rohrinnendurchmesser entspricht. Die zylindrischen Bereiche 4 dienen zum Kalibrieren eines Rohrendes 3. Dazu wird der Kopf 1 gemäss Fig. 1 in Richtung des Pfeiles 10 in Längsrichtung in das Rohrende 3 eingedreht. Durch einen zylindrischen Bereich 4, der dem Innendurchmesser des Rohrendes 3 entspricht, wird das Rohrende 3 kalibriert und bezüglich der Achse 11 ausgerichtet. Ein unrundes Rohrende 3 wird somit durch einen zylindrischen Bereich 4 plastisch verformt und gerundet. Die Fig. 3a zeigt ein auf einem zylindrischen Bereich 4 aufgeschobenes Rohrende 3. Das Rohrende 3 ist beispielsweise das Rohrende eines Verbundrohres, das eine mittlere Schicht 3b beispielsweise aus Aluminium sowie eine äussere Schicht 3a und eine innere Schicht 3c jeweils aus einem geeigneten Kunststoff aufweist. Solche Rohre sind biegbar und plastisch verformbar. Vorzugsweise weist der Kopf 1 mehrere solche zylindrische Bereiche 4 auf, denkbar ist jedoch auch eine Ausführung, bei der lediglich ein solcher zylindrischer Bereich 4 vorgesehen ist.

An jedem zylindrischen Bereich 4 schliesst in Gegenrichtung des Pfeiles 10 gesehen am Kopf 1 ein kegelförmiger Bereich 6 an, der jeweils auch koaxial zur Achse 11 angeordnet ist und durch die Spannuten 8 unterbrochen ist. Jeder kegelförmige Bereich 6 weist vier Schneidkanten 5 auf, welche durch die Spannuten 8 gebildet sind. Die kegelförmigen Bereiche 6 dienen zum Entgraten einer Innenkante 3d des Rohrendes 3. Dazu wird der Kopf 1 über die in Fig. 3a gezeigte Position weiter in Richtung des Pfeiles 10 in das Rohrende 3 eingeschoben und gleichzeitig am Griff 2 in Richtung des Pfeiles 12 gedreht. Die vier Schneidkanten 5 hobeln hierbei die Kante 3d ab, bis die Stirnseite 3f des Rohrendes 3 an einer Schulter 9 des Kopfes 1 anliegt. Die abgehobelte und entgratete Kante 3d weist nun die in Fig. 3b gezeigte konische Fläche 3e auf. Die Entgrattiefe entspricht hierbei der in Fig. 3a gezeigten Länge B des kegelförmigen Bereiches 6. Die Länge B ist vorzugsweise wesentlich kleiner als die Länge A des zylindrischen Bereichs 4. Die Zentrierung des Rohrendes 3 am zylindrischen Bereich 4 sowie der Anschlag an der Schulter 9 gewährleisten ein gleichmässiges Entgraten und eine definierte Entgrattiefe.

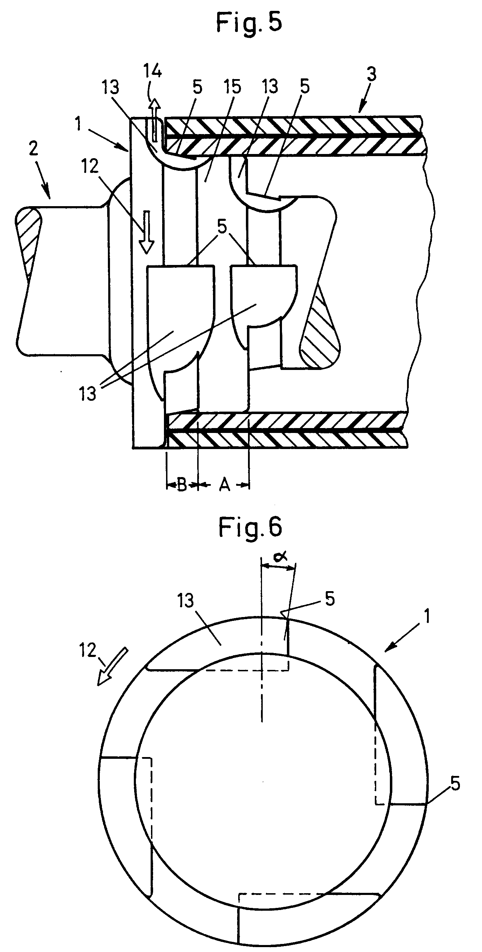

Die in den Fig. 5 und 6 gezeigte Variante des erfindungsgemässen Werkzeugs 1 unterscheidet sich von der oben beschriebenen Ausführung dadurch, dass radial angeordnete und sich in Umfangsrichtung erstreckende Spannuten 13 in die Aussenseite des Kopfes eingearbeitet sind. Beim Entgraten werden die Späne durch die Spannuten 13 nach aussen geleitet, wie in der Fig. 5 durch den Pfeil 14 angedeutet ist. Eine umlaufende, innenseitig am Rohr 3 anliegende Fläche 15 verhindert hierbei, dass Späne in das Rohr 3 gelangen können. Die Anzahl der Spannuten 13 entspricht der Anzahl der Schneidkanten 5, die vorzugsweise gemäss Fig. 6 in einem Schnittwinkel α am Kopf angeordnet sind.

Das Werkzeug eignet sich insbesondere zum Bearbeiten von Verbundrohren mit einer Innenschicht aus Metall, jedoch ist auch eine Verwendung bei einfachen Kunststoffrohren denkbar. Das Werkzeug ist vorzugsweise ein Handwerkzeug, denkbar ist jedoch auch eine Ausführung, bei welcher der Kopf 1 mittels eines elektrischen Motors gedreht wird.

## Patentansprüche

1. Werkzeug zum Kalibrieren und Entgraten von Rohrenden (3), mit wenigstens einem zylindrischen Bereich (4) zum Kalibrieren und einem kegelförmigen Bereich (6) zum Entgraten, dadurch gekennzeichnet, dass die beiden Bereiche (4, 6) an einem Kopf (1) hintereinander angeordnet sind, derart, dass beim Einführen des Kopfes (1) in ein zu bearbeitendes Rohrende (3) zuerst der zylindrische Bereich (4) und anschliessend der kegelförmige Bereich (6) mit dem Rohrende (3) in Eingriff bringbar sind und hierbei der zylindrische Bereich zum Kalibrieren des Rohrendes vorgesehen ist und dass eine Schulter (9) hinter dem zylindrischen Bereich angeordnet ist, welche sich radial nach aussen erstreckt und einen Anschlag für die Stirnseite des Rohrendes bildet, um dieses zu zentrieren und ein gleichmässiges Entgraten sowie eine definierte Entgrattiefe zu gewährleisten.

2. Werkzeug nach Anspruch 1, dadurch gekennzeichnet, dass der Kopf (1) stufenförmig ausgebildet ist und jede Stufe für einen bestimmten Rohrinnendurchmesser einen zylindrischen Bereich (4) zum Kalibrieren und einen kegelförmigen Bereich (5) zum Entgraten aufweist.

3. Werkzeug nach Anspruch 1 oder 2, dadurch gekennzeichnet, dass wenigstens ein kegelförmiger Bereich (6) wenigstens eine Schneidkante (5) aufweist, die durch eine Spannut (8,13) gebildet ist.

4. Werkzeug nach Anspruch 3, dadurch gekennzeichnet, dass die Spannut (13) in die Aussenseite des Kopfes (1) eingearbeitet ist und sich in Umfangsrichtung des Kopfes (1) erstreckt.

5. Werkzeug nach Anspruch 4, dadurch gekennzeichnet, dass mehrere, vorzugsweise zu jedem kegelförmigen Bereich (6) vier radial angeordnete Spannuten (8) in den Kopf (1) eingearbeitet sind.

6. Werkzeug nach einem der Ansprüche 1 bis 5, dadurch gekennzeichnet, dass der Kopf (1) an einem breiten Ende an einem Handgriff (2) befestigt ist.

7. Verwendung des Werkzeuges gemäss Anspruch 1 zum Kalibrieren und Entgraten von Verbundrohren oder Kunststoffrohren für die Hausinstallation.

## Claims

1. Tool for calibrating and deburring tube ends (3), having at least one cylindrical region (4) for calibrating and at least one conical region (6) for deburring, characterized in that the two regions (4, 6) are arranged one behind the other on a head (1), such that, when the head (1) is introduced into a tube end (3) to be processed, initially the cylindrical region (4) and then the conical region (6) can be brought into engagement with the tube end (3) and the cylindrical region is intended here for calibrating the tube end, and in that a shoulder (9) is arranged behind the cylindrical region, which shoulder extends radially outwards and forms a stop for the end face of the tube end, in order to centre the latter and to ensure uniform deburring and a defined deburring depth.

2. Tool according to Claim 1, characterized in that the head (1) is of stepped design, and each step has a cylindrical region (4) for calibrating and a conical region (5) for deburring for a specific tube inner diameter.

3. Tool according to Claim 1 or 2, characterized in that at least one conical region (6) has at least one cutting edge (5), which is formed by a flute (8, 13).

4. Tool according to Claim 3, characterized in that the flute (13) is made in the outer side of the head (1) and extends in the circumferential direction of the head (1).

5. Tool according to Claim 4, characterized in that a plurality of radially arranged flutes (8), preferably four for each conical region (6), are made in the head (1).

6. Tool according to one of Claims 1 to 5, characterized in that the head (1) is fixed at a broad end to a handle (2).

7. Use of the tool according to Claim 1 for calibrating and deburring composite tubes or plastic tubes for domestic installation.

## Revendications

1. Outil de calibrage et d'ébarbage d'extrémités tubulaires (3), comprenant au moins une région cylindrique (4) affectée au calibrage et une région conique (6) affectée à l'ébarbage, caractérisé par le fait que les deux régions (4, 6) sont agencées en succession sur une tête (1) de telle sorte que, lors de l'introduction de la tête (1) dans une extrémité tubulaire (3) devant être usinée, tout d'abord la région cylindrique (4), puis la région conique (6) puissent être mises en prise avec ladite extrémité tubulaire (3), la région cylindrique étant alors prévue pour le calibrage de l'extrémité tubulaire ; et par le fait qu'un épaulement (9), disposé derrière la région cylindrique, s'étend radialement vers l'extérieur et forme une butée pour la face frontale de l'extrémité tubulaire, de manière à centrer cette dernière et à garantir un ébarbage uniforme, ainsi qu'une profondeur d'ébarbage bien définie.

2. Outil selon la revendication 1, caractérisé par le fait que la tête (1) est de réalisation étagée et chaque gradin présente, pour un diamètre intérieur de tube déterminé, une région cylindrique (4) affectée au calibrage et une région conique (5) affectée à l'ébarbage.

3. Outil selon la revendication 1 ou 2, caractérisé par le fait qu'au moins une région conique (6) présente au moins une arête tranchante (5), formée par une dépouille (8, 13) d'évacuation de copeaux.

4. Outil selon la revendication 3, caractérisé par le fait que la dépouille (13) d'évacuation de copeaux est pratiquée dans la face extérieure de la tête (1) et s'étend dans le sens périphérique de ladite tête (1).

5. Outil selon la revendication 4, caractérisé par le fait que plusieurs dépouilles (8) d'évacuation de copeaux, agencées radialement, sont pratiquées dans la tête (1), de préférence au nombre de quatre pour chaque région conique (6).

6. Outil selon l'une des revendications 1 à 5, caractérisé par le fait que la tête (1) est fixée à une poignée (2) par une extrémité large.

7. Utilisation de l'outil conforme à la revendication 1, pour le calibrage et l'ébarbage de tubes composites ou de tubes en matière plastique destinés à la tuyauterie domestique.
